# EUROPEAN PATENT APPLICATION

(11) **EP 2 305 590 A1**
(43) Date of publication of application: **06.04.2011**
(21) Application number: 09773822.3
(22) Date of filing: 26.06.2009
(51) Int. Cl.: B66B 3/00, H04N 7/18

(54) **DEVICE FOR DISPLAYING THE SITUATION OUTSIDE A BUILDING WITH A LIFT**

(30) Priority: 01.07.2008 RU 2008129287
(71) Applicant: Gorilovskij, Aleksej Alekseevich, St.Petersburg 197183 (RU); Gorilovskij, Dmitrij Alekseevich, St.Petersburg 197183 (RU)
(72) Inventor: Gorilovskij, Aleksej Alekseevich, St.Petersburg 197183 (RU); Gorilovskij, Dmitrij Alekseevich, St.Petersburg 197183 (RU)
(74) Representative: Langley, Peter James
(86) International application number: PCT/RU2009/000334
(87) International publication number: WO 2010/002290

(57) **Abstract**

This utility model is for additional elevator equipment and may, among other things, be used for elevators in hotels, business and exhibition centers, retail complexes, etc. This device for monitoring exteriors of elevator-equipped buildings includes a number of video cameras positioned on the outer wall along the vertical span of the building, a display screen in the elevator car, a controller, an elevator position indicator and a multiplexer. Controller output is fed directly into the monitor. The output socket of the multiplexer is connected to the first input socket of the controller whose second input socket is connected to the output socket of the elevator position indicator. The device contains at least one set of additional video cameras positioned outside the building, at different heights elsewhere on the premises. Feed cables from the first, second ... n^{th} video cameras installed on the outer wall of the building are connected, respectively, to the 1^{st}, 2^{nd} ... n^{th} input sockets of a commutation switch; feed cables from the 1^{st}, 2^{nd}, ... ln^{th} additional cameras are connected, respectively, to the 11^{th}, 12^{th}, ... ln^{th} input sockets of the commutation switch, whose output socket is connected to the input socket of a multiplexer. In this fashion, the exterior of the building where the elevator is located can be monitored through cameras installed at a distance from the building itself.

## Description

This utility model is for additional elevator equipment and may, among other applications, be used for elevators in hotels, business and exhibition centers, retail complexes, etc.

There already exists a device (JP 7081858) that displays different information for elevator passengers, such as date, weather, day of the week and season, and may be used for virtual monitoring of the building's exterior.

This device contains an information generator and an internal monitoring device inside the elevator car.

The drawback of this device is its inability to display the exterior of the building where the elevator is located in real time.

There is yet another well-known device (JP 11079580) for monitoring the exterior of elevator-equipped buildings. It includes one video camera positioned outside the building, a controller, a display screen in the elevator car and an elevator position indicator. Controller output is fed directly into the monitor.

The video camera is attached to the outer wall of the building at mid-floor, so that the camera's lens could move vertically and sideways to allow for monitoring of the building's exterior from the first floor to the top floor.

The drawback of this device is that a single camera (rather than multiple cameras at different floors) installed at a fixed location (in this case, at mid-height of the building) will produce a distorted image on the display as the elevator moves up or down.

Besides, any mechanical devices on the outer wall of the building (the device for moving the lens or the entire video camera) must be maintained against the elements (lubrication, spare part replacement, etc.).

There is yet another well-known device (RU 55756 U1) for monitoring exteriors of elevator-equipped buildings. It includes a video camera positioned outside the building, a display screen in the elevator car, a controller and an elevator position indicator. Controller output is fed directly into the monitor. The device contains one or more additional video cameras positioned along the vertical span of the building and a multiplexer. Feed cables from the cameras are connected, respectively, to the 1^{st}, 2^{nd}, ... n^{th} input sockets of the multiplexer, which is in turn connected to the first input socket of the controller; the output socket of the elevator position indicator is connected to the second input socket of the controller.

This utility model is based on the above design.

Using this device, one can monitor the building's exterior from inside the elevator, with video signal being fed in from fixed observation points alongside the vertical span of the building.

However, this device does not allow for monitoring video feeds from observation points located at a distance from the building where the elevator is located.

The intended purpose of this utility model is to allow for monitoring video feeds from observation points located at a distance from the building where the elevator is located.

According to this utility model, the device for monitoring exteriors of elevator-equipped buildings includes a number of video cameras positioned on the outer wall along the vertical span of the building, a display screen in the elevator car, a controller, an elevator position indicator and a multiplexer. Controller output is fed directly into the monitor. The output socket of the multiplexer is connected to the first input socket of the controller whose second input socket is connected to the output socket of the elevator position indicator. The device contains at least one set of additional video cameras positioned outside the building, at different heights elsewhere on the premises, and a commutation switch. Feed cables from the first, second ... n^{th} video cameras installed on the outer wall of the building are connected, respectively, to the 1^{st}, 2^{nd}, ... n^{th} input sockets of the commutation switch; feed cables from the 1^{st}, 2^{nd}, ... ln^{th} additional cameras are connected, respectively, to the 11^{th}, 12^{th}, ... ln^{th} input sockets of the commutation switch, whose output socket is connected to the input socket of the multiplexer.

The applicant had been unable to identify any existing designs identical to the proposed utility model, and thus one may conclude that it should satisfy the novelty criterion.

The design of this useful model is illustrated on the diagram below.

The device for monitoring the exterior of the elevator-equipped Building 1 (the elevator itself is not shown) includes video cameras 2, 6, 7, 8 ... n positioned on the outer wall of Building 1. These video cameras are positioned equidistantly (at 3m intervals) along the vertical span of Building 1. The elevator has Monitor 3 installed inside - a 32" built-in TFT panel by SHARP. The output socket of Controller 4 (Computer Dynamics Nd61400 Pentium4 2.4 GHz, 1024 MP RAM, 40Gb HDD, operating system Linux 2.6.1) is connected to the input socket of Monitor 3. Elevator Position Indicator 5 (for example, an optical one) is installed in the elevator shaft. The output socket of the indicator is connected to the second input socket of Controller 4. The first input socket of Controller 4 is connected to the output socket of Multiplexer 9, which in this case is an 8-port Ethernet router (D-Link DGS 1008). The device includes at least one (in this case, it is in fact one) set of additional video cameras 11, 12, 13, 14... ln installed outside Building 1 and at some distance there from, at various heights throughout Facility 20, which is, essentially, a high-rise. It could also be a different structure, such as a building or a broadcast television tower, etc. The device contains Commutation Switch 10, which in this case is a US-made CISCO-9000 with a wireless interface. In this example, the commutation switch is operated with a remote control unit placed in the elevator.

Output sockets of the 1^{st}, 2^{nd}, ... n^{th} video cameras (2, 6, 7, 8, ... n) installed on the outer wall of Building 1 are connected, respectively, to the 1^{st}, 2^{nd}, ... n^{th} input sockets of Commutation Switch 10; output sockets of the 1^{st}, 2^{nd}, ... ln^{th} video cameras (11, 12, 13, 14... ln) positioned throughout Facility 20 are connected, respectively, to the 11^{th}, 12^{th}, 13^{th}, 14^{th} ... ln^{th} input sockets of Commutation Switch 10. The output socket of Commutation Switch 10 is connected to the input socket of Multiplexer 9.

In this example, using the remote control (or controls on Commutation Switch 10 itself), one can select one of the two observation regimes, alternating between the feed from video cameras 2, 6, 7, 8 ... n installed on Building 1 and additional video cameras 11, 12, 13, 14... ln located throughout the territory of Facility 20.

Video feeds from each selected camera or group of cameras are channeled through Commutation Switch 10 and into Multiplexer 9. Images are sequenced in Multiplexer 9, and the aggregate picture is channeled to Controller 4. Indicator 5 feeds data on the position of the elevator car to Controller 4. As a result, Controller 4 selects the most up to date image from the feed received from Multiplexer 9 and displays the position of the elevator on Monitor 3. Elevator passengers can thus monitor the exterior of elevator-equipped Building 1 in real time as the car moves along, alternating between the feed from fixed observation points on the outer wall of Building 1 or observation points located throughout Facility 20, at a distance from Building 1. Thus, the functionality of this utility model allows for monitoring and displaying inside the elevator not only video feeds from the cameras installed on the building itself, but also from those positioned at other locations, at a distance from such a building.

This device is factory-made on regular equipment, using off-the-shelf components and materials, which, in this applicant's opinion, satisfies the industrial applicability criterion.

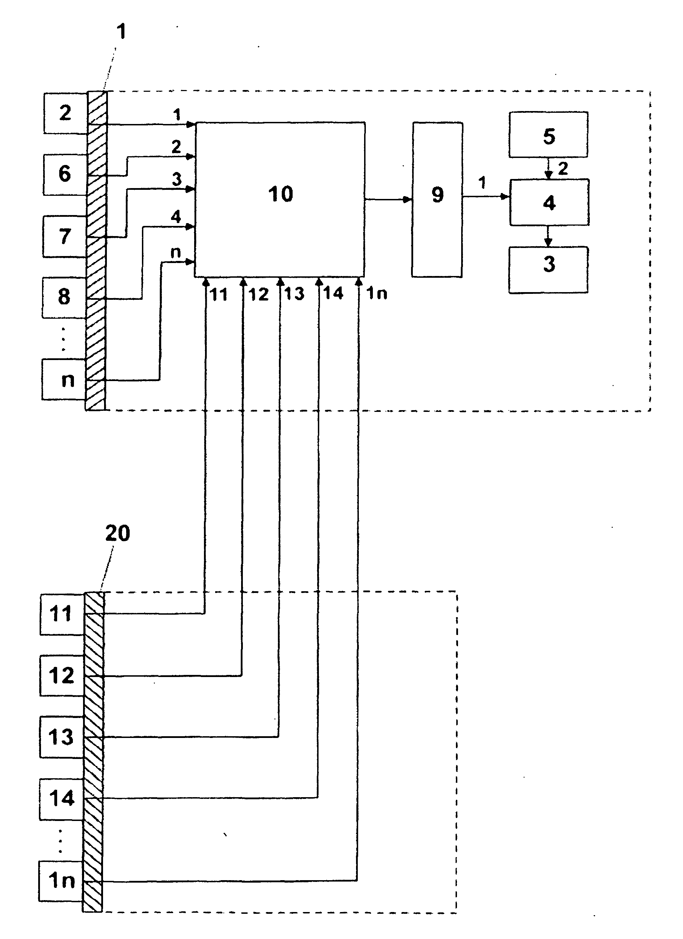

## Claims

1. This device for monitoring exteriors of elevator-equipped buildings includes a number of video cameras positioned on the outer wall along the vertical span of the building, a display screen in the elevator car, a controller, an elevator position indicator and a multiplexer. Controller output is fed directly into the monitor. The output socket of the multiplexer is connected to the first input socket of the controller whose second input socket is connected to the output socket of the elevator position indicator: The distinguishing feature of this device is that it contains at least one set of additional video cameras positioned outside the building, at different heights elsewhere on the premises, and a commutation switch. Feed cables from the first, second ... n^{th} video cameras installed on the outer wall of the building are connected, respectively, to the 1^{st}, 2^{nd}, ... n^{th} input sockets of the commutation switch; feed cables from the 1^{st}, 2^{nd}, ... ln^{th} additional cameras are connected, respectively, to the 11^{th}, 12^{th}, ... ln^{th} input sockets of the commutation switch, whose output socket is connected to the input socket of the multiplexer.
